# EUROPEAN PATENT APPLICATION

(11) **EP 1 670 270 A1**
(43) Date of publication of application: **14.06.2006**
(21) Application number: 05075388.8
(22) Date of filing: 17.02.2005
(51) Int. Cl.: H04Q 7/32

(54) **Method and means for controlling a mobile terminal**

(30) Priority: 13.12.2004 EP 04078372
(71) Applicant: Nederlandse Organisatie voor Toegepast-Natuurwetenschappelijk Onderzoek TNO, 2628 VK Delft (NL)
(72) Inventor: van Loon, Johannes Maria, 2719 JE Zoetermeer (NL); van der Wal, Jacobus Cornelis, 2613 VE Delft (NL)
(74) Representative: Winckels, Johannes Hubertus F.

(57) **Abstract**

Method and means for controlling a mobile terminal (1) which is fit to be activated by its owner (2) in order to be admitted to a service provided by or via a telecommunications network (4), wherein the terminal is activated by its owner but wherein the terminal can be remotely deactivated. The remote deactivation may be initiated by the owner of the mobile terminal via the telecommunications network, e.g. via a second, mobile or not-mobile, terminal (5) or via the Internet (14), via a multimedia terminal (15). Remote deactivation may also be initiated by the telecommunications network or the relevant service provider, e.g. based on abnormal usage. Remote deactivation may also be initiated by equipment positioned at or near an area where restrictions apply to the use of mobile terminals. Remote deactivation may be performed by powering-down the terminal or by deactivation or resetting a Subscriber Identity Module (SIM) located in the terminal.

## Description

### FIELD OF THE INVENTION

The invention refers to a method for controlling a mobile terminal which is fit to be activated by its owner in order to be admitted to a service provided by or via a telecommunications network, e.g. after a security code being entered. Moreover, the invention refers to a system which is adapted to perform said method.

### BACKGROUND OF THE INVENTION

The most common example of a mobile terminal is a mobile phone or similar device which is fit to use mobile telephony and/or data services provided by a mobile telephony and/or data service provider.

One issue of this patent application relates to unauthorised and possibly malicious use of the network and/or its services by using a mobile terminal which is e.g. left unsupervised by the rightful user (owner). A Subscriber Identity Module (SIM), e.g. in the form of a SIM card in a mobile phone, may be used to allow a service provider to check whether a requested service should be provided to that terminal. This process is comparable to a "logon" onto a computer system (generally, a process of gaining access or signing in to a computer system including some form of verifying the user's credentials), in this case to a service provided by or via the telecommunications network. In mobile networks it is commonly referred to as the mobile terminal being "attached" to the network, which requires the SIM to be activated.

As the use of a service usually incurs costs, it is important to protect the legitimate owner of the terminal and/or the legitimate subscriber to the service against unauthorised or malicious use. To prevent unauthorised use of the service at the expense of the subscriber, the subscriber may protect any activation of the SIM and thus attachment to the network and access to the service, by configuring the SIM card so that a security or CHV (Card Holder Verification) code, e.g. having the form of a PIN (Personal Identification Number), a password, fingerprint or any other security item, is required to be entered. A terminal without an activated SIM will provide no or very limited service (e.g. emergency service) only. Thus, a mobile terminal with a not-activated SIM is protected against unauthorised use of the relevant service. Consequently, once the SIM in the terminal has been activated, there are no further restrictions on using the device according to the service profile valid for that subscriber.

In this document an "activated terminal" comprises a terminal with an activated SIM which may attach to the mobile network to be able to use one or more mobile services e.g. according to a service profile valid for the relevant subscriber. A "deactivated terminal" comprises a terminal where, in some form, a restriction applies w.r.t. to the use of services accessible by or via that terminal. A terminal with a non-activated or deactivated SIM thus is referred to as a "deactivated terminal". In the following, however, also other instances of a "deactivated terminal" will be discussed, where the terminal's deactivation not necessarily relates to or (primarily) is due to a non-activated or deactivated SIM.

It is well known that mobile subscriber terminals, such as mobile phones, are easily stolen, lost, mislaid or otherwise left unsupervised. An activated terminal as described above (a terminal with an activated SIM) which is left unsupervised, may be used unauthorised, possibly maliciously, at the expense of the subscriber. The damages to the subscriber from malicious use may be considerable and may far exceed the value of the lost/stolen terminal device itself. Possibly, there are damages to the service provider too, e.g. if the costs related to the unauthorised use cannot be recuperated from the subscriber. When a subscriber realises that the device is no longer under her (a female service subscriber / terminal owner will be assumed here and below) supervision with -possibly- a still activated SIM, the subscriber is likely to be worried about unauthorised use and in particular about the resulting financial damages.

The current method allows the rightful owner/subscriber to request her service provider to block her SIM (viz. in the owner/subscriber's records at the service provider's administration). The service provider will detach the terminal from the network, disallowing any future access to the network related to that (blocked) SIM. Thus, the subscriber and the service provider are protected from any further malicious use and from the related damages. In many cases, blocking the SIM cannot be reversed. At best, unblocking involves a time consuming and tedious procedure, to warrant that unblocking cannot be used maliciously. Hence, SIM blocking is most appropriate in cases where the owner/subscriber is reasonably certain that the device is irrecoverably lost or stolen. However, in many other cases, the step to irreversibly block the SIM may be rather drastic. One example is that is not certain whether the device with an activated SIM is in a relative secure environment (e.g. at home) or in an insecure environment (e.g. a hotel bar). Another example is that the device is known to be in a relatively secure environment (e.g. at home, at work) but that the status of the SIM card (activated or not activated) is unknown. One more example is that the device with the activated SIM card is known to be in a relatively secure environment (e.g. at home, at work), but it cannot be excluded that some of the people having access to the device (e.g. children, co-workers) may use it for their own purpose or for a practical joke. In each of the cases, there is a good chance that the device itself will be recovered. Blocking the SIM in such cases, though very effective, may not be appropriate while not blocking the SIM leaves the owner with an, at best, uneasy feeling about the potential that the service may be used unauthorised. For pre-paid subscribers, in addition, SIM blocking is in many cases not an attractive option, even if the risk of malicious use of the mislaid terminal is high; requesting their SIM to be blocked usually means that the pre-paid credit is lost entirely.

Another issue of this patent application relates to the fact that in some environments the use of some mobile devices is discouraged or even not allowed. The restrictions may relate to the disturbance and distraction resulting from using the service (e.g. being called in a movie theatre, music hall, church, library etc.), to the very nature of the service provided by the terminal (e.g. in a prison, during a school examination) and/or to the safety risk related to the electromagnetic radiation transmitted by the device and which may interfere with other, more critical, equipment (e.g. medical equipment in a hospital, aviation equipment in an aircraft). In some of these cases, access to the mobile service is effectively blocked by interfering with the radio signals, e.g. by using so-called 'jammers'. However, such a solution is very indiscriminate, in many cases illegal and it is obviously no solution when radiating electromagnetic waves should be avoided. In other cases, the public is simply requested to refrain from using their mobile device or is urged to switch off all their electronic devices. Even a minority of people not paying sufficient attention to these appeals may lead, quite often to their embarrassment, to annoyance and/or to dangerous situations.

Below a method and system will be presented comprising improvements with relation to the issues addressed above.

### SUMMARY OF THE INVENTION

One aspect of the method and system presented below is to enable remote deactivation of a mobile terminal without blocking (viz. in the service provider's records) its SIM. Another aspect is to enhance the subscriber's and the service provider's security in situations as described above. Yet another aspect is to deactivate a mobile terminal in areas where the use of mobile terminals is undesired or prohibited.

The novel method presented below proposes -in short- to remotely deactivate the mobile terminal, after which the terminal only can be re-activated via its normal and preferably secured (CHV, PIN etc.) activation procedure.

Said remote deactivation may be initiated by the owner of the mobile device (e.g. in case the device is no longer under her supervision), by the network or by equipment positioned at or near an area where restrictions apply to the use of such devices, e.g. where its use is discouraged or not permitted. The method of remote deactivation does not rely on any changes in the network administration (such as those related to blocking a SIM) but uses an action and/or means which are fit to remotely deactivate the mobile terminal itself. Some examples of such actions and/or means for deactivation are:
- Powering-down the terminal: If the terminal powers itself down, this effectively detaches the terminal from the network and also ensures no electromagnetic waves are radiated. In case the SIM is CHV-protected, access to the network service can be regained only after the terminal is powered-on and the correct CHV code has been entered. In case the SIM is not CHV-protected, a CHV may be enforced upon it in order to block unauthorised activation of the SIM and, consequently, block access to the service.
- Deactivating or resetting the SIM: If the SIM is deactivated or reset, this effectively detaches the terminal from the network. In case the SIM is CHV-protected, access to the network service can be regained only after the correct CHV code has been entered. In case the SIM is not CHV-protected, a CHV may be enforced upon it in order to block unauthorised activation and unauthorised access to the service. A device with a deactivated or reset SIM is not entirely free from radiating electromagnetic waves. However, in that state the transmitter/receiver of the device are not operated and thus the main source of radiation has still been eliminated. In some cases, limited access to the network service may still be provided without an activated SIM, e.g. making emergency calls. In that case the terminal is not guaranteed to be free from radiating electromagnetic waves.
- Forcing the terminal or the SIM into a different mode as regards access to the service: In some cases not only the SIM can be secured by a CHV, also the terminal can be set to limit access to the service. For example, only a pre-programmed number can be called (sometimes called 'babysitter' mode), dialling options are limited to selected numbers (e.g. only all numbers or a designated subset of the numbers in the terminal's phone book, only one of the last n dialled numbers, etc.). Changing between these modes is commonly protected by a separate code (sometimes referred to as a 'phone code'), very akin to the CHV/PIN addressed above.
   Deactivating access to the usual service options and forcing the terminal or the SIM into a more restricted mode as regards the service provided, provides a more subtle way of protection against abuse than obtained by deactivating all access to the mobile service.
- Forcing the use of another SIM card in the terminal: Some terminals may be equipped with more than a single SIM card, where each SIM card relates to a particular service access. Deactivating access to the full service may be achieved by selecting one of the other SIM cards which provides access to a more limited set of services.

The examples above all relate to a deactivation action towards the terminal in order to interrupt or shut down the current network service provided to that terminal. In this way the rightful owner/subscriber is protected against unauthorised use of the service. Alternative to a complete interruption of all service, deactivation may result in a limited set of network services such that the financial consequences of the unauthorised use may be correspondingly limited to an acceptable level.

The command(s) for terminal deactivation may be conveyed via the mobile network to which the terminal is attached:
- One exemplary implementation may comprise the use of an SMS (Short Message Service) message with one or more predefined contents, possibly further protected by one or more keywords. This allows the rightful owner/subscriber to use any appropriate means (e.g. a second mobile terminal or a fixed telephony terminal) to send an SMS message to her own terminal. In that case, the predefined contents and/or keyword(s) are expected to be known to the terminal owner/subscriber. Hence, the deactivation via this route can only be performed by, or on behalf of, the owner/subscriber and not by any unauthorised parties.
- A second exemplary implementation may comprise the use of the same method by the network or service provider. In that case, the predefined contents and/or keyword(s) should be known to the network or service provider. One option is to use the IMSI (International Mobile Subscriber Identity) as (part of) the keyword(s).
- A third exemplary implementation may comprise the use of an OTA (Over The Air) provisioning command to initiate remote deactivation. The OTA commands may be sent by a network provider's OTA platform -linked to or incorporated in the telecommunications network- using an SMS service, to a subscriber terminal. Usually, the OTA commands are generated by the network or service provider; therefore, the subscriber is expected to contact the network/service provider's CRM (Customer Relationship Management) centre by any suitable means (e.g. phone, fax, e-mail, web page, etc.) to request her terminal to be remotely deactivated. Because the consequences of the remote deactivation of the terminal are much less severe ('soft') compared to blocking the SIM ('hard'), the verification of the requester's identity may be also be less stringent

Thus, for the sake of securing the terminal, the subscriber may send a suitable command to her own mobile terminal. She may do so either directly (e.g. conveying the command directly via SMS), or via a mediating platform fit to be used to generate and convey the relevant remote deactivation code or command. The mediating platform may e.g. be accessible to the CRM centre as described above and/or accessible to the mobile terminal owner via an Internet web page (using an e.g. multimedia computer terminal), and is fit to be used to generate and convey the relevant remote deactivation code or command Then, the actual command may be generated by or on behalf of the mediating platform and conveyed to the mobile terminal via the mobile network, e.g. by the OTA platform and the SMS service.

The previous discussion addresses to the case where a subscriber -e.g. in the case that the mobile terminal has been mislaid- will take the initiative to remotely deactivate her mobile terminal. In another situation, however, the network, e.g. represented by a network management centre or by an automated agent operating on its behalf- may take the initiative to remotely deactivate a mobile terminal. For example, the network management or a separate fraud detection and fraud limitation centre may detect an excessive or an a-typical use of the service, incompatible with the usage pattern which the relevant subscriber showed in the past. Also, the network service provider may allow the subscriber, as an additional protection service provided to the subscriber, to specify a limit to what the network should regard as 'normal' use of the service, e.g. specified separately for different categories such as domestic calls, calls to foreign countries, the use of specially charged information numbers etc. Exceeding a specified limit, be it subscriber-defined or defined by the network, may trigger the network management to initiate, without intervention of the subscriber or the (rightful or not-rightful) terminal user, to remotely deactivate the relevant terminal. If the terminal is still under control of the subscriber, she may easily and quickly re-establish service by re-activating the mobile terminal. An unauthorised party, lacking the correct security code, will not be able to do so.

Another situation the invention addresses, as stated before, is the situation that the terminal enters a area where restrictions apply on the use of the mobile terminal, e.g. a 'forbidden' area. Then, the command(s) may also be, and preferably are, conveyed via a more local, short-range network. The commands may be conveyed by any technology suitable for operation over a short range, such as Bluetooth or ZigBee, or by using related technology such as the technology used for RF transponders. If the preferred option is used to communicate with -or to at least send messages (commands) to- the mobile terminal via the short-range network, the mobile terminal also comprises means for at least one of these short-range communication technologies or at least means for reception. The system may optionally be equipped with means to detect the vicinity or the approach of a mobile terminal or it may be designed to not rely on or to omit such means. Remotely deactivating a subscriber terminal -e.g. a mobile telephone- for sake of securing an area where restrictions apply to the use of mobile terminals, may be initiated by means which are located at a border of that area and/or within the areas to be protected. Such means may be fit to spawn a request (command) and to convey it to the mobile terminal, via the mobile network and/or via one of the short-range communication technologies indicated above, when this is opportune, e.g. when the terminal comes in the vicinity of said means or when the presence of the mobile terminal is otherwise detected, suspected or simply assumed as a possibility. The request may be tailored to the specific restrictions that apply in the area, e.g. to completely power-down the mobile terminal, to power-down the radio communication part of the mobile terminal, to deactivate the transmit section of the mobile terminal or to restrict the transmit power used by the mobile terminal to a safe (lower than normal) level. Also resetting the SIM is one of the options available to remotely deactivate the mobile terminal.

Below the proposed method will be discussed by means of an exemplary embodiment of a system which is adapted for executing the method discussed above.

### EXEMPLARY EMBODIMENTS

Figure 1 shows an exemplary embodiment of a system adapted to remotely deactivate an e.g. mislaid or stolen mobile terminal.
Figure 2 shows a flow diagram comprising requests to remotely deactivate a mislaid or stolen mobile terminal.
Figure 3 shows an exemplary embodiment of a system adapted to remotely deactivate a mobile terminal entering a area with restricted use of mobile terminals.

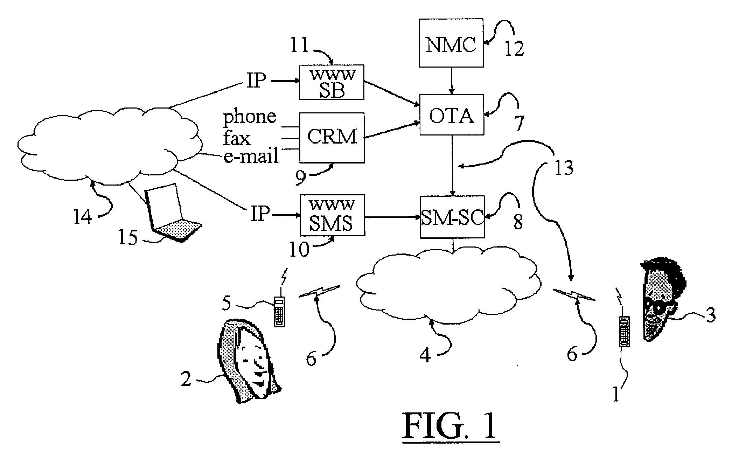

The system in figure 1 shows a mobile terminal 1 of a subscriber 2. The subscriber notices that the mobile terminal is no longer under her supervision; it may be mislaid, possibly stolen, or just left on one the locations she recently visited. It can thus not be excluded that an unauthorised party 3 has gained control over the mobile terminal 1. It is further assumed that the SIM in terminal 1 is activated and that, based on the activated SIM, the mobile terminal is attached to the mobile network 4. The subscriber 2 thus is worried about the possibility that the mobile terminal 1, no longer under her control and if the assumed conditions about an activated SIM are indeed fulfilled, may be used (abused) to access the network services with detriment to subscriber 2. As long as the mobile terminal is attached to the network, terminal 1 can be used at the expense of subscriber 2.

In one embodiment, subscriber 2, as soon as she assesses the situation as potentially harmful, uses any SMS capable equipment (for example, a mobile phone 5 borrowed from a friend, a suitable fixed line phone (not shown), a (mobile or fixed) multimedia terminal (not shown) using a web page providing access to the SMS service 10, etc. to send an SMS message 6 to her own mobile terminal 1. This message is typically handled by the Short Message Service-Service Centre (SM-SC) 8. The message indicates, in the contents of the SMS message 6, a request to the terminal to power-down the terminal; the message also contains a pre-defined keyword, known to subscriber 2 and terminal 1, to verify the authenticity of the request. Terminal 1, at the reception of the SMS message 6, checks its contents, verifies the keyword and executes the power-down request (command). This action effectively also detaches the mobile terminal from the mobile network 4. The SIM can now only be re-activated after entering the correct password, which password is known to subscriber 2 and not to any unauthorised party 3. Consequently, without an activated SIM, the mobile terminal cannot re-attach itself to the mobile network and the network services can no longer be used. As soon as subscriber 2 regains control over terminal 1, she can enter the correct password, reactive the SIM and re-attach to the mobile network 4 in the usual way.

In another embodiment, for example when the mobile terminal is not able to decode or not able to execute a power-down request, the message contents sent as command 6 to the mobile terminal instructs it to reset the SIM, rather than powering down the device. This has the same effect as in the above case, except the device is not completely powered-down.

In a more advanced embodiment, the terminal 1 is able to decode and execute a variety of commands related to restricting the use of network services, e.g. limiting the use of the device to receiving (incoming) calls only, limiting the use of the device for outgoing calls to a smaller and 'safer' subset of the number range (e.g. only the numbers included in the terminal's phone book, only those numbered marked as 'safe' in the terminal's phone book, only the last few numbers most recently dialled, just a single number- 'babysitter mode'), or any other restriction to the network services that the terminal allows to be set. In that case, subscriber 2 has the choice from a range of options to remotely limit the access to the network services in a more subtle way, simply by sending commands (e.g. SMS messages 6) with a different content. In the above embodiments, the request (command) is issued by the subscriber2 herself or by any agent acting on instructions from subscriber 2.

In yet another embodiment the command to power-down or reset the SIM card is issued by an OTA (Over The Air) provisioning server 7, as commonly used by many mobile network operators. The mobile network also comprises a Short Message Service Centre (SM-SC) 8 to convey the OTA requests 13 encapsulated in one or more SMS messages to the mobile terminal 1. Terminal 1, at the reception of said SMS message(s), processes the OTA command 13 contained in it.

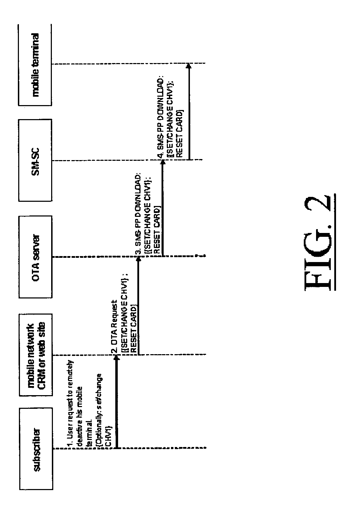

More and different embodiments are foreseen as regards the control over the OTA commands 13 issued by the OTA server 7. In one embodiment the service provider's Customer Relations Management department 9 is able to, on request (via telephone, fax or email) of the subscriber, instruct the OTA server to issue a suitable command to the subscriber's terminal. In another embodiment, the network service provider maintains a web site 11 where subscribers (amongst which subscriber 2), after proper authentication, are allowed to instruct the OTA server to issue a command.
An example of the flow diagram suitable to the embodiments using the OTA server 7 is provided in figure 2. The following describes the most relevant steps in the flow diagram.

### 1. Subscriber request

A request of subscriber 2 to remotely deactivate her mobile terminal. This request may be directed to the Customer Relation Management department 9 of her mobile network provider by any suitable means, e.g. phone, fax, e-mail, etc., indicated as points of contact for the CRM department 9. The network provider may also provide the option to enter the request on a web site 11 created for this purpose. If the subscriber 2 carelessly did not protect the SIM in terminal 1 with a password (PIN, officially indicated as CHV1 - Card Holder Verification #1), or if the subscriber is not entirely sure that the current CHV1 is still secure, she may specify a (different) CHV1. In the flow diagram of figure 2, this option is indicated between curly brackets as "Optionally: SET/CHANGE CHV1". The CRM department 9 or the web application 11 receives the request and may verify it as coming from the subscriber2.

### 2. Request to OTA server [{SET/CHANGE CHV1}; RESET SIM]

The CRM department 9 or the web application 11 instructs the OTA server 7 to issue an OTA request to fulfil the subscriber's request. The OTA server is instructed, for example, to issue an OTA request 'RESET SIM' or any other command that may serve the objective. In case the option is used to set or change the mobile terminal's CHV1, the OTA server is also instructed to issue an OTA request 'SET/CHANGE CHV1'. The requests may consist of separate OTA requests, for example one for setting/changing the password and one for deactivating or resetting the SIM, or the requests may be combined into a fewer number of OTA requests, e.g. a single request for both setting the password and deactivating/resetting the SIM.

### 3. OTA server - SM-SC: SMS-PP DOWNLOAD [{SET/CHANGE CHV1}; RESET SIM]

The OTA server 7 composes one or more short messages 13 for sending the OTA request to the Short Message - Service Centre (SM-SC). The short message(s) are forwarded to the SMS Service Centre SMS-SC 8 via the 'data download via SMS Point-to-Point' service.

### 4. SM-SC - terminal: SMS-PP DOWNLOAD [{SET/CHANGE CHV1}; RESET SIM]

The SM-SC 8 ensures that the short message(s) 13 are delivered via the mobile network 4 to the mobile terminal 1. Note that the short messages 13 as issued by the OTA server differ in contents from the short messages 6 as issues by the subscriber in another embodiment.

### 5. Mobile terminal: {SET/CHANGE CHV1}; RESET SIM

The terminal 1, consisting of Mobile Equipment (ME) and Subscriber Identity Module (SIM - not shown separately in the picture), processes the OTA request 13 resulting in optionally setting/changing a password and in resetting/deactivating the SIM. The process and information exchange between ME and SIM is not shown in the picture.

In addition, it is noted that the request 'SET CHV1' or 'CHANGE CHV1' is optional and is only needed if the subscriber has not set a password before loosing the terminal or it may be useful if the subscriber is not entirely sure about the security of the current code.

It is also noted that in the flow diagram the OTA request 'RESET SIM' is used. Instead of this request other requests or combinations of requests may be used that eventually serve the same purpose to remotely detach the mobile terminal from the network and to prevent it from reattaching without a proper authorisation check or to otherwise limit the services that can be obtained from the mobile network. For example, the requests 'POWER OFF CARD' and/or 'REFRESH' may be used, or other suitable commands that may be specified in the future. Additional commands may also be used to further aid in the process, e.g. to disconnect a call in progress, to display text on the screen about the reset taking place or having taken place and/or to provide an audible indication that a reset will be performed or is being performed.

The previous embodiments all relate to the case where the subscriber 2 takes the initiative to remotely deactivate her mobile terminal 1. In another exemplary embodiment, the service provider's network management centre 12 or an automated agent operating on its behalf, takes the initiative to remotely deactivate a mobile terminal. For example, the network management or a separate fraud detection and fraud limitation centre (not shown in figure 1) may detect an excessive or a-typical use of the service, incompatible with the usage pattern the subscriber 2 has shown in the past. Also, the network service provider may allow the subscriber, as an additional protection service provided to the subscriber, to specify a limit to what the network should regard as 'normal' use of the service (possibly specified separately for different categories such as domestic calls, calls to foreign countries, the use of specially charged information numbers etc.). Exceeding a specified limit, be it subscriber-defined or defined by the network, then triggers the network management 12 to initiate, without the intervention of the subscriber 2 or the user of the terminal, to remotely deactivate mobile terminal 1. If the mobile terminal 1 is still under control of the subscriber 2, she may easily and quickly re-establish service by re-activating the mobile terminal 1. An unauthorised party 3, lacking knowledge of the correct CHV1, will not be able to do so.

For example, in case the subscriber exceeds limits set by the network, the management centre 12 may also remotely block the subscriber 2 from access to the network services by remotely changing the CHV 1, for example using the OTA requests as described above. As the subscriber/user of the mobile terminal is able to change the CHV1, using the CHV2, this method of remote blocking subscriber 2's access to the service may be neither permanent nor full-proof. Yet, it is expected to take some time before the subscriber/user is able to do so. This allows the network service provider some additional time, e.g. to contact the subscriber 2 about the excessive use and/or to apply more effective blocking methods, requiring changes in the network administration.

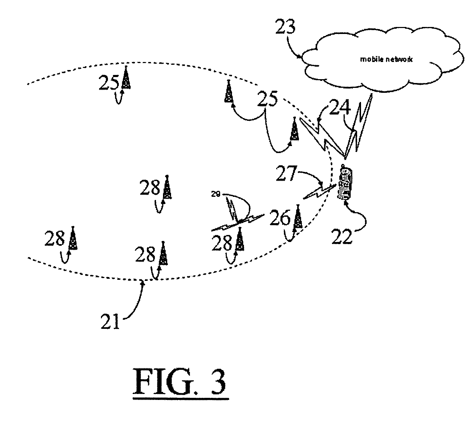

Figure 3 shows a an exemplary embodiment of a system for securing an area 21 where restrictions apply to the use of mobile terminals, e.g. a concert hall, a hospital, an aircraft etc. The system uses one or more beacons 25, located at suitable positions, e.g. within or at the area border. Detection of the terminal 1 approaching the area 21, may be accomplished by detection of a signal 24, normally transmitted by the mobile terminal 1 in order to remain attached to the mobile network. Instead of (beacon 26) or in addition to said signal 24, the presence or proximity of terminal 1 may be detected using a different radio technology 27 than the one used for the mobile service, for example technologies such as Bluetooth or ZigBee. Such technologies intended for short-range communication provide the option to automatically discover other terminals within the range of the technology and allow such terminals to connect to each other. Other technologies are not precluded, such as the use technologies used by RF transponders and RFID tags. Thus, one or more beacons 25 and/or one or more beacons 26 may detect terminal 1 within the range of the beacon and initiate a communication session in order to exchange information with terminal 1.

The system is further equipped with means to process the information (not shown in figure 3) received by beacons 25 and/or beacons 26 and to generate one or more requests (commands) destined for the approaching mobile terminal 1. Such means may organised in one or more processing centres (centralised or concentrated) where the beacons communicate with the information processing centre(s). Alternatively, one or more processing centres in the system may be distributed over the various locations at or near the beacons.

The commands generated by the system are sent to terminal 1 via the mobile network 23 and the radio technology 24 normally used for the service (in which case either the beacons 25 and/or the system is able to communicate with the mobile network 23), and/or via one or more of the beacons 26 and one or more of the different short-range radio technologies 27 as mentioned.

For example, terminal 1 may identify itself, such that the system (centralised or distributed at or near the beacon locations) is able to distinguish between terminals as regards the applicable restrictions. Also, the system conveys to the mobile terminal one or more requests (commands) to restrict the use of the mobile terminal. As mentioned, this may be realised using the mobile network 23 using the signal normally used for this communication 24, provided that the terminal is sufficiently identified, and/or this may be realised via one or more of the short-range technologies 27.

In another exemplary embodiment, proximity detection is not relied upon and/or is forgone. Then, one or more beacons 28 repeatedly transmit or broadcast, with intervals not larger than the time the mobile terminal would normally be within the beacon range, one or more requests 29 (commands) to any mobile terminal which is within the range of the beacon. For small areas or for areas which have a limited number of access ports leading into the area where restrictions apply, any short-range technology suitable to convey the requests 29 from beacon 28 to terminal 1 will be preferred, not excluding the short-range technologies 27 suitable for two-way communication. For specific cases, for example to secure a large area or to reserve the network capacity for high-priority use such as disaster recovery, also a Cell Broadcast mechanism (as usually available in the more common technologies 24 used for the mobile service) may be applied to convey the requests (commands) to all mobile terminals in the coverage area.

Said requests (commands) 29 indicate the applicable restrictions or the limits to the allowed use of mobile terminals within the area 21. The request may thus be tailored to the specific restrictions that apply in the area and possibly be specific to the mobile terminal or to a group of terminals. The requests could be, for example, to completely power-down the mobile terminal, to power-down the radio communication part of the mobile terminal, to deactivate the transmit section of the mobile terminal or to restrict the transmit power used by the mobile terminal to a safe level, lower than could be used under normal -unrestricted- operations. The result is that, on reception and decoding of the requests 29, terminal 1 is made aware of the locally applicable restrictions. The terminal is further expected to act accordingly, e.g. to power-down the terminal, to stop or suppress any emission of undesired signals or radiation which e.g. could harm sensitive apparatuses within area 21, or disturb other people within area 21, e.g. a meeting room, church or concert hall. Resetting the SIM card is one of options also available to remotely deactivate the mobile terminal.

## Claims

1. Method for controlling a mobile terminal (1) which is fit to be activated by its owner (2) in order to be admitted to a service provided by or via a telecommunications network (4), the method comprising the steps:
- the terminal is activated by its owner;
- the terminal is remotely deactivated.

2. Method according to claim 1, wherein the terminal is activated by entering a security code.

3. Method according to claim 1, wherein said remote deactivation is initiated by the owner of the mobile terminal.

4. Method according to claim 3, wherein said remote deactivation is initiated by the owner of the mobile terminal via the telecommunications network.

5. Method according to claim 3, wherein said remote deactivation is initiated by the owner of the mobile terminal via the telecommunications network and a second, mobile or not-mobile, terminal (5).

6. Method according to claim 3, wherein said remote deactivation is initiated by the owner of the mobile terminal via a second network and a third terminal.

7. System according to claim 6, wherein said remote deactivation is initiated by the owner of the mobile terminal via the Internet (14) or a similar computer network, said third terminal being a computer terminal (15).

8. Method according to claim 1, wherein said remote deactivation is initiated by the telecommunications network.

9. Method according to claim 1, wherein said remote deactivation is initiated by the relevant service provider.

10. Method according to claim 1, wherein said remote deactivation is initiated by equipment positioned at or near an area where restrictions apply to the use of mobile terminals.

11. Method according to claim 1, wherein said remote deactivation is performed by powering-down the terminal.

12. Method according to claim 1, wherein said remote deactivation is performed by deactivation or resetting a Subscriber Identity Module (SIM) located in the terminal.

13. Method according to claim 12, wherein said remote deactivation or resetting the Subscriber Identity Module is performed by means of an OTA (Over The Air) provisioning command.

14. System comprising a telecommunications network and a mobile terminal (1) which comprises activation means to be activated by the terminal's owner in order to activate the terminal and to be admitted to a service provided by or via said telecommunications network, the system comprising deactivation means which are adapted for remotely deactivating the term inal.

15. System according to claim 14, said activation means being fit to activate the terminal by means of inputting a security code.

16. System according to claim 14, said deactivation means being adapted for remotely deactivating the terminal by the terminal owner.

17. System according to claim 14, said deactivation means being adapted for remotely deactivating the terminal by the terminal owner via the telecommunications network.

18. System according to claim 14, said deactivation means being adapted for remotely deactivating the terminal by the terminal owner via the telecommunications network and a second, mobile or not-mobile, terminal (5).

19. System according to claim 14, said deactivation means being adapted for remotely deactivating the terminal by the terminal owner via a second network and a third terminal.

20. System according to claim 17, said deactivation means being adapted for remotely deactivating the terminal by the terminal owner via the Internet(14) or a similar computer network, said third terminal being a computer terminal (15).

21. System according to claim 14, said deactivation means being adapted for remotely deactivating the terminal by the telecommunications network.

22. System according to claim 14, said deactivation means being adapted for remotely deactivating the terminal by the relevant service provider.

23. System according to claim 14, said deactivation means being adapted for remotely deactivating the terminal at or near an area where restrictions apply to the use of mobile terminals.

24. System according to claim 23, said deactivation means being adapted to communicate with the terminal via short distance transmission means (25-28).

25. System according to claim 14, said deactivation means being adapted to power-down the terminal.

26. System according to claim 14, said deactivation means being adapted to deactivate or reset a Subscriber Identity Module (SIM) located in the terminal.

27. System according to claim 26, said deactivation means being adapted to deactivate or reset the Subscriber Identity Module by means of an OTA (Over The Air) provisioning command sent by an OTA platform, linked to or incorporated in the telecommunications network.
